# EUROPEAN PATENT SPECIFICATION

(11) **EP 4 517 572 B1**
(45) Date of publication and mention of the grant of the patent: **13.05.2026**
(21) Application number: 23825368.6
(22) Date of filing: 30.08.2023
(51) Int. Cl.: G06F 21/57, G06F 21/60, G06F 21/10, G06F 21/12, G06F 21/62

(54) **SOFTWARE FILE, AND SOFTWARE RUNNING METHOD AND RELATED APPARATUS THEREFOR**
SOFTWAREDATEI, SOFTWAREAUSFÜHRUNGSVERFAHREN UND ZUGEHÖRIGE VORRICHTUNG
FICHIER LOGICIEL, ET PROCÉDÉ D'EXÉCUTION DE LOGICIEL ET APPAREIL CONNEXE ASSOCIÉ

(30) Priority: 13.07.2023 CN 202310865291
(43) Date of publication of application: 05.03.2025
(73) Proprietor: HYGON INFORMATION TECHNOLOGY CO., LTD., Tianjin 300392 (CN)
(72) Inventor: JIANG, Xin, Binhai New Area, Tianjin 300392 (CN); YING, Zhiwei, Binhai New Area, Tianjin 300392 (CN)
(74) Representative: Regimbeau
(86) International application number: PCT/CN2023/115783
(87) International publication number: WO 2025/010804

(56) References cited:
- WO-A1-2021/004863
- CN-A- 101 094 058
- CN-A- 109 993 003
- CN-A- 111 124 956
- US-A1- 2018 204 017
- KALIAPPAN VISHNU ET AL: "High-Secured Data Communication for Cloud Enabled Secure Docker Image Sharing Technique Using Blockchain-Based Homomorphic Encryption", vol. 15, no. 15, 30 July 2022 (2022-07-30), CH, pages 1 - 16, XP093233082, ISSN: 1996-1073, Retrieved from the Internet <URL:https://www.mdpi.com/1996-1073/15/15/5544/pdf> [retrieved on 20241210], DOI: 10.3390/en15155544

## Description

### CROSS-REFERENCE TO RELATED APPLICATION

The present application claims priority of the Chinese Patent Application No. 202310865291.X filed on July 13, 2023.

### TECHNICAL FIELD

Embodiments of the present disclosure relate to a software file, a software running method and an apparatus related thereto.

### BACKGROUND

Commercialized software is usually released through offline sale of CDs and online downloads, and is licensed to allow a user to use a function of the software in order to achieve the profits of the enterprise. However, through the reverse analysis technology, the pirated software can invalidate the authorization function of the software, but the business function of the software can still work normally, which will greatly affect the profits of the software enterprise. Therefore, the ability to prevent software piracy is directly related to the profits of the software enterprise.

Software reverse analysis technology by disassembling the software binary file to obtain its computer CPU instruction, and then analyze and crack. Therefore, in order to prevent the disassembly of the software binary file, the software is encrypted to form encrypted software to improve the anti-piracy ability of the software. However, for the encrypted software, it is still possible to implement to reverse and crack the encrypted software.

Therefore, how to improve the anti-reversal and anti-cracking ability of the software has become an urgent problem for those skilled in the art to solve. "High-Secured Data Communication for Cloud Enabled Secure Docker Image Sharing Technique Using Blockchain- Based Homomorphic Encryption" presents a distributed-system framework called Safe Decker Image Sharing with Homomorphic Encryption and Blockchain (SeDIS-HEB). WO2021/004863A1 provides techniques facilitating security hardening systems that host containers.

### SUMMARY

The technical problem solved by embodiments of the present disclosure is how to improve the anti-reversal and anti-cracking ability of the software. The invention is defined by the attached independent claims.

In order to solve the above problem, embodiments of the present disclosure provide the following technical solutions.

Embodiments of the present disclosure provide a software file, which includes:
an encryption container disk image file, encrypted by a first encryption key and comprising an encryption container disk image packaged with working software;
a bootstrap program, used to instruct a security processor to obtain a first decryption key corresponding to the first encryption key, so that an encryption container decrypts the encryption container disk image file according to the first decryption key to obtain the encryption container disk image and the working software stored to an encryption memory of the encryption container, the encryption container being a container corresponding to the encryption container disk image and the encryption container disk image further comprising a local authorization file corresponding to the working software, the working software being booted when the local authorization file is legal.

Optionally, the software file further includes a key ciphertext of the first encryption key, the key ciphertext is obtained by encrypting the first encryption key with a second encryption key; the bootstrap program is used to instruct the security processor to decrypt the key ciphertext according to a second decryption key to obtain the first encryption key and the first decryption key, so that the encryption container decrypts the encryption container disk image file according to the first decryption key to obtain the encryption container disk image and the working software stored to the encryption memory of the encryption container, the first encryption key corresponds to the first decryption key, and the second decryption key corresponds to the second encryption key.

Optionally, the second encryption key comprises a second public key, and the second decryption key comprises a second private key.

Optionally, the first encryption key comprises a first public key, and the first decryption key comprises a first private key.

Embodiments of the present disclosure further provide a software running method adapted to an operating system, the software includes the software file according to any one described above, and the software running method includes:
obtaining a booting request to boot the working software of the software file;
booting the bootstrap program of the software file according to the booting request and allocating an encryption memory for an encryption container corresponding to the software file;
instructing the security processor through the bootstrap program to obtain the first decryption key of the encryption container disk image file of the software file and sending the first decryption key to the encryption container, so that the encryption container decrypts the encryption container disk image file to obtain the encryption container disk image and the working software stored to the encryption memory, the first decryption key corresponding to the first encryption key and the encryption container disk image file being encrypted by the first encryption key; and
booting the working software when the encryption container is instructed to determine that a local authorization file in the encryption container disk image is legal.

Optionally, the software running method further includes:
instructing the encryption container, when the encryption container is instructed to determine that the local authorization file of the working software is illegal, to obtain an authorization reply from a software server corresponding to the working software, so as to boot the working software when the encryption container obtains an authorization legal reply.

Optionally, the software running method further includes:
instructing the encryption container, when the encryption container is instructed to determine that the local authorization file of the working software is illegal, to obtain an authorization reply from a software server corresponding to the working software, so as to exit abnormally when the encryption container obtains an authorization illegal reply.

Optionally, the instructing the encryption container to obtain an authorization reply from a software server corresponding to the working software includes:
instructing the encryption container to obtain software authorization feature information of the working software and a software authorization code obtained according to the software authorization feature information; and
instructing the encryption container to send the software authorization feature information and the software authorization code to the software server of the working software to obtain the authorization reply.

Optionally, the software running method further includes:
booting the working software in a trial state when the encryption container is instructed to be connected to a software server of the working software and the encryption container is not capable of being connected to the software server.

Optionally, the software file further comprises a key ciphertext obtained by encrypting the first encryption key with a second encryption key, the step of instructing the security processor through the bootstrap program to obtain the first decryption key of the encryption container disk image file of the software file and sending the first decryption key to the encryption container, so that the encryption container decrypts the encryption container disk image file further includes:
instructing the security processor through the bootstrap program to obtain a second decryption key for the key ciphertext, decrypting the key ciphertext to obtain the first encryption key and the first decryption key corresponding to the first encryption key, the second decryption key corresponding to the second encryption key; and
instructing the security processor to send the first decryption key to the encryption container, so that the encryption container decrypts the encryption container disk image file using the first decryption key.

Optionally, the second encryption key comprises a second public key, and the second decryption key comprises a second private key, the step of instructing the security processor through the bootstrap program to obtain the first decryption key of the encryption container disk image file of the software file and decrypting the encryption container disk image file further includes:
instructing the security processor through the bootstrap program to obtain the second private key, decrypting the key ciphertext to obtain the first encryption key and the first decryption key corresponding to the first encryption key; and
instructing the security processor to send the first decryption key to the encryption container, so that the encryption container decrypts the encryption container disk image file using the first decryption key.

Embodiments of the present disclosure further provide a software running apparatus adapted to an operating system, the software includes the software file according to any one described above, and the software running apparatus includes:
a booting request obtaining unit, adapted to obtain a booting request to boot the working software of the software file;
an encryption memory allocation unit, adapted to boot the bootstrap program of the software file according to the booting request and allocate an encryption memory for an encryption container corresponding to the software file;
an encryption container disk image and working software obtaining unit, adapted to instruct the security processor through the bootstrap program to obtain the first decryption key of the encryption container disk image file of the software file and send the first decryption key to the encryption container, so that the encryption container decrypts the encryption container disk image file to obtain the encryption container disk image and the working software stored to the encryption memory, the first decryption key corresponding to the first encryption key and the encryption container disk image file being encrypted by the first encryption key; and
a working software booting unit, adapted to boot the working software when the encryption container is instructed to determine that a local authorization file in the encryption container disk image is legal.

Optionally, the software running apparatus further includes:
an authorization reply obtaining unit, adapted to instruct the encryption container, when the encryption container is instructed to determine that the local authorization file of the working software is illegal, to obtain an authorization reply from a software server corresponding to the working software, so as to boot the working software when the encryption container obtains an authorization legal reply.

Optionally, the authorization reply obtaining unit is further adapted to instruct the encryption container, when the encryption container is instructed to determine that the local authorization file of the working software is illegal, to obtain an authorization reply from a software server corresponding to the working software, so as to exit abnormally when the encryption container obtains an authorization illegal reply.

Optionally, the authorization reply obtaining unit, adapted to instruct the encryption container to obtain an authorization reply from a software server corresponding to the working software, includes:
instructing the encryption container to obtain software authorization feature information of the working software and a software authorization code obtained according to the software authorization feature information; and
instructing the encryption container to send the software authorization feature information and the software authorization code to the software server of the working software to obtain the authorization reply.

Optionally, the working software booting unit is further adapted to boot the working software in a trial state when the encryption container is instructed to be connected to a software server of the working software and the encryption container is not capable of being connected to the software server.

Optionally, the software file further comprises a key ciphertext obtained by encrypting the first encryption key with a second encryption key, and the encryption container disk image and working software obtaining unit, adapted to instruct the security processor through the bootstrap program to obtain the first decryption key of the encryption container disk image file of the software file and send the first decryption key to the encryption container, so that the encryption container decrypts the encryption container disk image file, further includes:
instructing the security processor through the bootstrap program to obtain a second decryption key for the key ciphertext, decrypting the key ciphertext to obtain the first encryption key and the first decryption key corresponding to the first encryption key, the second decryption key corresponding to the second encryption key; and
instructing the security processor to send the first decryption key to the encryption container, so that the encryption container decrypts the encryption container disk image file using the first decryption key.

Optionally, the second encryption key comprises a second public key, and the second decryption key comprises a second private key, and the encryption container disk image and working software obtaining unit, adapted to instruct the security processor through the bootstrap program to obtain the first decryption key of the encryption container disk image file of the software file and send the first decryption key to the encryption container, so that the encryption container decrypts the encryption container disk image file, further includes:
instructing the security processor through the bootstrap program to obtain the second private key, decrypting the key ciphertext to obtain the first encryption key and the first decryption key corresponding to the first encryption key; and
instructing the security processor to send the first decryption key to the encryption container, so that the encryption container decrypts the encryption container disk image file using the first decryption key.

Embodiments of the present disclosure further provide an operating system, the operating system can execute a program which implements the software running method according to any one described above.

Embodiments of the present disclosure further provide a computer system, which includes an operating system, the operating system can execute a program which implements the software running method according to any one described above.

The software running method provided by the embodiments of the present disclosure is applied to an operating system and includes: obtaining a booting request to boot the working software of the software file; booting the bootstrap program of the software file according to the booting request and allocating an encryption memory for an encryption container corresponding to the software file; instructing the security processor through the bootstrap program to obtain the first decryption key of the encryption container disk image file of the software file and sending the first decryption key to the encryption container, so that the encryption container decrypts the encryption container disk image file to obtain the encryption container disk image and the working software stored to the encryption memory, the first decryption key corresponding to the first encryption key and the encryption container disk image file being encrypted by the first encryption key; running the encryption container disk image to boot the encryption container; and booting the working software when the encryption container is instructed to determine that a local authorization file in the encryption container disk image is legal. In this way, in the software running method provided by the embodiments of the present disclosure, the software file includes the encrypted working software and the encryption container disk image, the working software is decrypted in the encryption memory of the encryption container before booting the working software, and after booting the encryption container, when the encryption container is utilized to determine that the local authorization file corresponding to the working software is legal, the working software is booted in the encryption container, so that the working software is always running in the encryption memory of the encryption container. It can be seen that in the software running method provided in the embodiments of the present disclosure, the software is protected, before running, by encryption, which can prevent from skipping authorization to directly obtain the instruction of the working software; after the bootstrap program is booted and the decryption is performed, the encryption container disk image and the working software are stored in the encryption memory pre-allocated for the encryption container, and due to the access restriction of the encryption memory, it can still prevent from skipping the authorization to directly obtain the instruction of the working software; after the working software is booted, the working software runs in the secure environment of the encryption container, and the reading of the instruction and the reading of the data both require encryption and decryption with the key corresponding to the encryption container, which also prevents from skipping the authorization to directly obtain the instruction and data of the working software. Therefore, the software running method provided in the embodiments of the present disclosure can prevent the instruction from being obtained and thus from being reversed and cracked, whether before or during the running of the working software, and can improve the anti-piracy ability of the software.

### BRIEF DESCRIPTION OF THE DRAWINGS

To more clearly illustrate the technical solutions of the embodiments of the present disclosure, the accompanying drawings required to be used for the embodiments are briefly described in the following, obviously, the drawings in the following description are only embodiments of the present disclosure, for those skilled in the art, other drawings can be acquired based on the provided drawings without any inventive work.
FIG. 1 is a schematic diagram of a software instruction;
FIG. 2 is a schematic diagram of a software flow;
FIG. 3 is a schematic diagram of obtaining a released software file;
FIG. 4 is a schematic diagram of a software running method;
FIG. 5 is a schematic diagram of a process of obtaining a software file provided in an embodiment of the present disclosure;
FIG. 6 is a structural diagram of a computer system for running a software file provided in an embodiment of the present disclosure;
FIG. 7 is a schematic diagram of another process of obtaining a software file provided in an embodiment of the present disclosure;
FIG. 8 is a schematic flowchart of a software running method provided in an embodiment of the present disclosure; and
FIG. 9 is a structural block diagram of a software running apparatus provided in an embodiment of the present disclosure.

### DETAILED DESCRIPTION

The technical solutions in the embodiments of the present disclosure will be described clearly and completely in connection with the drawings in the embodiments of the present disclosure, obviously, the described embodiments in the specification are only a part but not all of the embodiments of the present disclosure. Based on the embodiments of the present disclosure, all other embodiments obtained by those skilled in the art without any inventive work should be within the scope of the present disclosure.

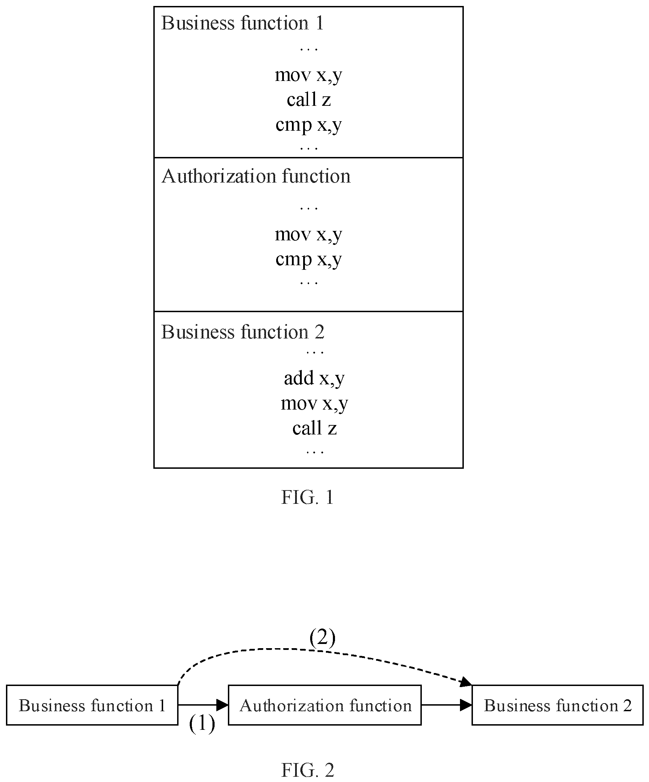

Software is an ordered collection of computer codes, which is saved in a disk or compact disc in a certain format file to form a software file. From the perspective of the computer CPU, the software is a set of computer CPU instructions, and constitutes a complex processing logic, including an authorization function logic (authorization function) and a business function logic (business function 1 and business function 2), in the form of CPU instructions. Please refer to FIG. 1 for details, FIG. 1 is a schematic diagram of a software instruction, the two logics are represented in software as a set of computer CPU instructions.

Business function 1 can be understood as an instruction that can be displayed directly for free without authorization, and business function 2 can be understood as an instruction that requires authorization before it can be displayed. An instruction of an authorization function is set between the two functions.

Of course, in other embodiments, it is possible to make all business functions require authorization before they can be displayed, and then the authorization function is in front of all business functions in the software execution logic.

The reverse analysis technology refers to the disassembly of the software image file to obtain the CPU instruction of the software, and then analyzes the logic function corresponding to the instruction, making it possible to skip the authorization function during the execution of the software.

Specifically, as illustrated in FIG. 2, the software flow (1) is a workflow of a normal software, and the legality of use is verified through the authorization function; the software flow (2) is a workflow of a cracked software, skipping the authorization function, so that it can be copied indefinitely and used without authorization.

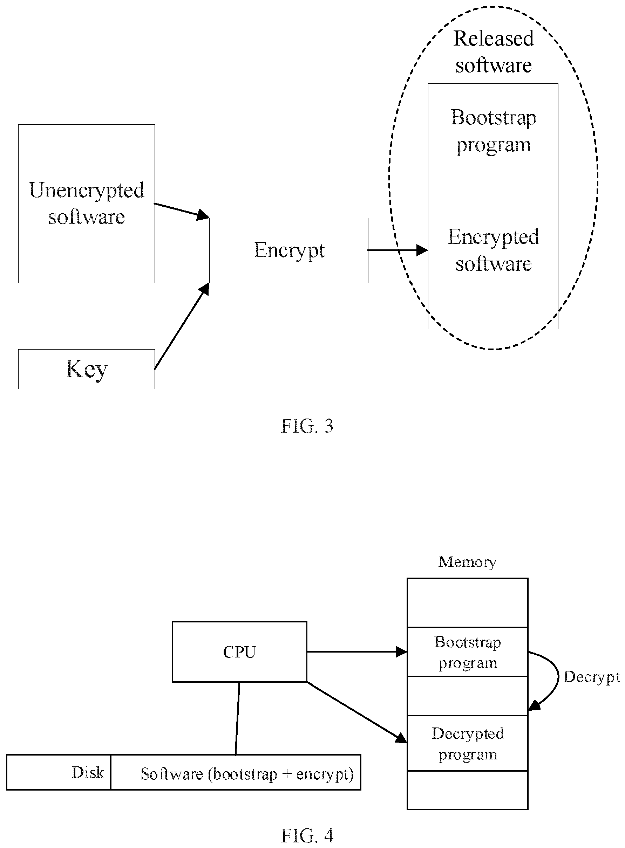

In order to avoid the software from being reversed and analyzed, in one scheme, please refer to FIG. 3, which illustrates a schematic diagram of obtaining a released software file. The working software of the software file is encrypted before the software is released, and then the encrypted software image file is released, that is, as illustrated in FIG.3, the working software is first encrypted using a key to obtain the encrypted working software, and then the encrypted working software and the unencrypted bootstrap program are merged into a released software file, typically a software disk image file.

When the working software needs to be booted, please refer to FIG. 4, which is a schematic diagram of a software running method. The operating system (i.e., the CPU in FIG. 4) first obtains the booting request for booting the working software, obtains the software disk image file from the disk, then boots the bootstrap program, obtains the encrypted working software from the software disk image file through the bootstrap program, decrypts it and stores it in the memory, and then executes the decrypted software instruction.

It can be seen that in the released software file obtained through the above method, the encrypted working software is obtained because the working software is encrypted. Therefore, when the encrypted working software is in a static and unexecuted state, there is no way to obtain the CPU instruction through technologies such as static disassembly. However, when the working software is in the process of being executed, the working software is saved in the memory in the form of plaintext. Therefore, by using the instruction and data of the working software, which is in the memory, during running, it is possible to extract the CPU instruction and analyze the business logic during running to achieve cracking.

Based on this, the embodiments of the present disclosure provide a software file, a software running method and a related apparatus, the software running method is adapted to an operating system and includes:
obtaining a booting request to boot the working software of the software file;
booting the bootstrap program of the software file according to the booting request and allocating an encryption memory for an encryption container corresponding to the software file;
instructing the security processor through the bootstrap program to obtain the first decryption key of the encryption container disk image file of the software file and sending the first decryption key to the encryption container, so that the encryption container decrypts the encryption container disk image file to obtain the encryption container disk image and the working software stored to the encryption memory, the first decryption key corresponding to the first encryption key and the encryption container disk image file being encrypted by the first encryption key; and
booting the working software when the encryption container is instructed to determine that a local authorization file in the encryption container disk image is legal.

It can be seen that in the software running method provided in the embodiments of the present disclosure, the software is protected, before running, by encryption, which can prevent from skipping authorization to directly obtain the instruction of the working software; after the bootstrap program is booted and the decryption is performed, the encryption container disk image and the working software are stored in the encryption memory pre-allocated for the encryption container, and due to the access restriction of the encryption memory, it can still prevent from skipping the authorization to directly obtain the instruction of the working software; after the working software is booted, the working software runs in the secure environment of the encryption container, and the reading of the instruction and the reading of the data both require encryption and decryption with the key corresponding to the encryption container, which also prevents from skipping the authorization to directly obtain the instruction and data of the working software. Therefore, the software running method provided in the embodiments of the present disclosure can prevent the instruction from being obtained and thus from being reversed and cracked, whether before or during the running of the working software, and can improve the anti-piracy ability of the software.

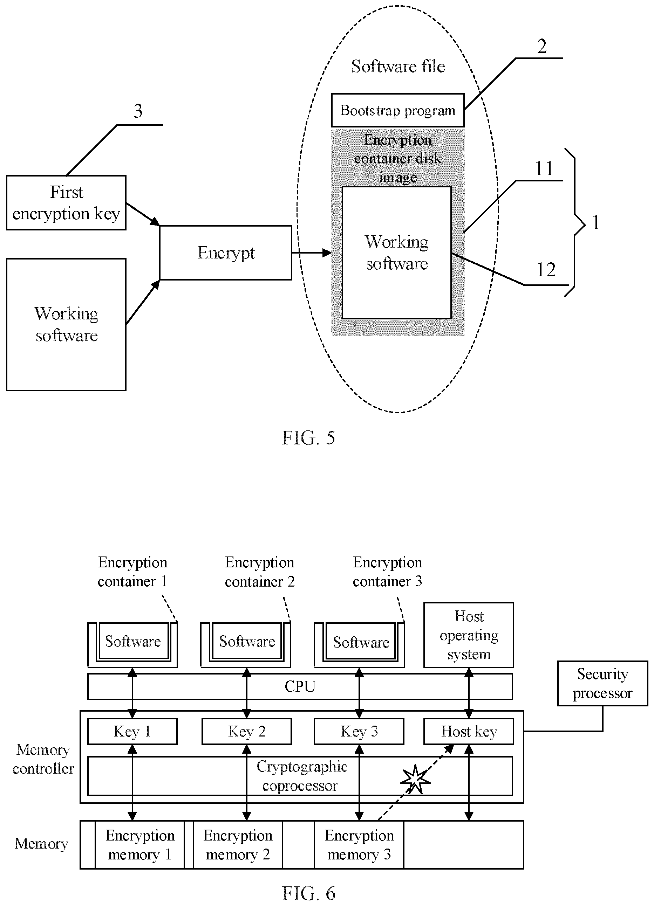

For ease of understanding, the software file provided in the present disclosure is first described, please refer to FIG. 5, which is a schematic diagram of a process of obtaining a software file provided in an embodiment of the present disclosure.

As illustrated in FIG. 5, in one specific embodiment, a software file provided in an embodiment of the present disclosure includes:
an encryption container disk image file 1, encrypted by a first encryption key 3 and including an encryption container disk image 11 packaged with working software 12;
a bootstrap program 2, used to instruct a security processor to obtain a first decryption key corresponding to the first encryption key, so that an encryption container decrypts the encryption container disk image file according to the first decryption key to obtain the encryption container disk image 11 and the working software 12 stored to an encryption memory of the encryption container, the encryption container being a container corresponding to the encryption container disk image.

It is easy to understand that the software file described herein is the file used for release. As illustrated in FIG. 5, the encryption container disk image 11 packaged with the working software 12 is encrypted using the first encryption key 3 before being released, and then is released along with the bootstrap program 2 in the form of plaintext.

It should be noted that the bootstrap program 2 of the software file provided in the embodiments of the present disclosure instructs the security processor to obtain the first decryption key corresponding to the first encryption key, and causes the encryption container to store, after causing the encryption container to decrypt the encryption container disk image file 1, the encryption container disk image 11 and the working software 12 obtained by decryption in the encryption memory of the encryption container.

To facilitate understanding of the encryption container and its encryption memory, please refer to FIG. 6, which is a structural diagram of a computer system for running a software file provided in an embodiment of the present disclosure.

As illustrated in FIG. 6, the computer system includes a memory, a memory controller, a processor, a security processor, a host operating system, and encryption containers. The encryption containers include an encryption container 1, an encryption container 2, and an encryption container 3.

When initialization of the encryption container is performed, the host operating system allocates the corresponding encryption memory for each encryption container through the memory controller. As illustrated in FIG. 6, a corresponding encryption memory 1 is allocated for the encryption container 1, a corresponding encryption memory 2 is allocated for the encryption container 2, a corresponding encryption memory 3 is allocated for the encryption container 3, and a cryptographic coprocessor of the memory controller is instructed by the security processor to allocate a key for each encryption container. As illustrated in FIG. 6, a key 1 is allocated for the encryption container 1, a key 2 is allocated for the encryption container 2, and a key 3 is allocated for the encryption container 3. When an encryption container is running, the hardware labels all codes and data within the container using a vmid (encryption container identifier), the vmid indicates which container the data belongs to, and during the operation of the encryption container, the vmid remains unchanged within the SOC, ensuring that the container data is correctly identified and not read by other software of the system (including other containers), and each key corresponds to the vmid of the encryption container.

The vmid is used to protect the container data inside the SOC, and a cryptographic coprocessor is built into the memory controller to protect the container data in the memory. When the data is written/read from the memory, the cryptographic coprocessor encrypts and/or decrypts the data using the key corresponding to the vmid, thus achieving the protection of the data.

Of course, the encryption container itself can set part of the memory to be non-encrypted normal memory, and use the non-encrypted normal memory to interact with peripherals or the host.

In the present disclosure, the encryption memory of the encryption container is used. Only by using the key and the vmid of the encryption container can the data be read and written, thus implementing the protection of data, that is, using the secure virtual machine of the processor and the memory encryption technology to implement to encrypt the container. The encryption container provides a more secure memory encryption function on the basis of the hardware virtualization, which makes each running encryption container run in its own independent encryption memory.

It should be noted that the first encryption key 3 and the first decryption key described herein correspond to each other, which means that after encryption by the first encryption key 3, decryption can be implemented by using the first decryption key, and includes both the case where the first encryption key 3 and the first decryption key are the same and the case where the first encryption key 3 and the first decryption key are different but decryption can be implemented through a decryption operation.

In a specific implementation, if the first encryption key and the first decryption key are the only keys for encryption and decryption, in order to implement that, at the time of releasing, the first encryption key is used for encryption, and during the using stage, the first decryption key can be used for decryption smoothly, that is, the user can obtain the first decryption key without any difficulty. The first encryption key includes a first public key, and the first decryption key includes a first private key.

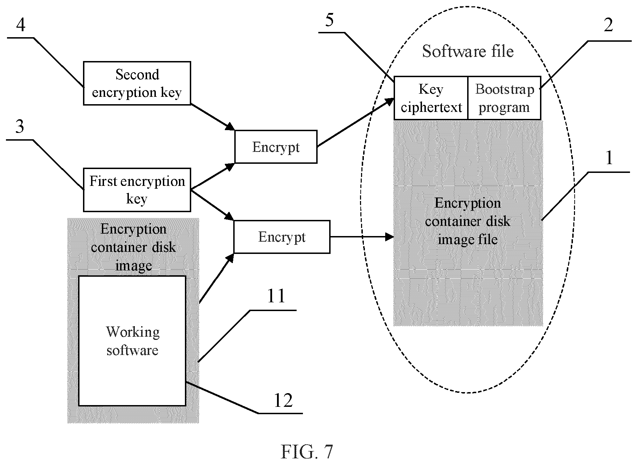

However, a method of directly encrypting by a first public key and decrypting by a first private key has a larger workload of encryption and decryption and lower efficiency. Therefore, in another specific implementation, please refer to FIG. 7, which is a schematic diagram of another process of obtaining a software file provided in an embodiment of the present disclosure. The software file provided in the embodiments of the present disclosure further includes a key ciphertext 5 of the first encryption key, the key ciphertext 5 is obtained by encrypting the first encryption key 3 with a second encryption key 4; the bootstrap program 2 is used to instruct the security processor to decrypt the key ciphertext 5 according to a second decryption key 4 to obtain the first encryption key 3 and the first decryption key and to send the first decryption key to the encryption container, so that the encryption container decrypts the encryption container disk image file 1 according to the first decryption key to obtain the encryption container disk image 11 and the working software 12 stored to the encryption memory of the encryption container, the first encryption key 3 corresponds to the first decryption key, and the second decryption key 4 corresponds to the second encryption key.

It is easily understood that the first encryption key 3 and the first decryption key correspond to each other in this embodiment, so that when the first encryption key 3 is obtained by decrypting the key ciphertext 5 using the second decryption key 4, the first decryption key can be obtained. Of course, the first encryption key 3 and the first decryption key described herein corresponding to each other includes both the case where the two are the same and the case where the two are different but decryption can be implemented through the decryption operation.

The second encryption key 4 and the second decryption key described herein correspond to each other, which means that after encryption by the second encryption key 4, decryption can be implemented by using the second decryption key, and includes both the case where the two are the same and the case where the two are different but decryption can be implemented through the decryption operation.

In one specific implementation, the second encryption key includes a second public key, and the second decryption key includes a second private key, in this way, the first decryption key can be easily obtained, and thus the working software can be obtained.

When the key ciphertext 5 of the first encryption key 3 is set, the second encryption key includes a second public key, and the second decryption key includes a second private key, the second public key may be used only to encrypt the first encryption key 3, and thus is less affected by the encryption efficiency. And a higher encryption efficiency can be ensured by using the first encryption key 3 to encrypt the encryption container disk image 11 and the working software 12, and similarly, a higher decryption efficiency can also be guaranteed, thereby ensuring the computing efficiency and improving the user experience on the basis of achieving security.

It is easy to understand that in other embodiments, more layers of encryption keys may be further included, but in order to facilitate implementing the decryption needs, the outermost encryption key is a public key, and the corresponding outermost decryption key is a private key.

It can be seen that the software file provided in the embodiments of the present disclosure, during the static storage stage, is protected by encryption, which can prevent from skipping authorization to directly obtain the instruction of the working software; during the software use stage, after the bootstrap program is booted and the decryption is performed, the encryption container disk image and the working software are stored in the encryption memory pre-allocated for the encryption container, and due to the access restriction of the encryption memory, it can still prevent from skipping the authorization to directly obtain the instruction of the working software; after the working software is booted, the working software runs in the secure environment of the encryption container, and the reading of the instruction and the reading of the data both require encryption and decryption with the key corresponding to the encryption container, which also prevents from skipping the authorization to directly obtain the instruction and data of the working software. Therefore, in the software file provided in the embodiments of the present disclosure, the instruction can be prevented from being obtained and thus from being reversed and cracked, no matter before or during the running of the working software, which can improve the anti-piracy ability of the software.

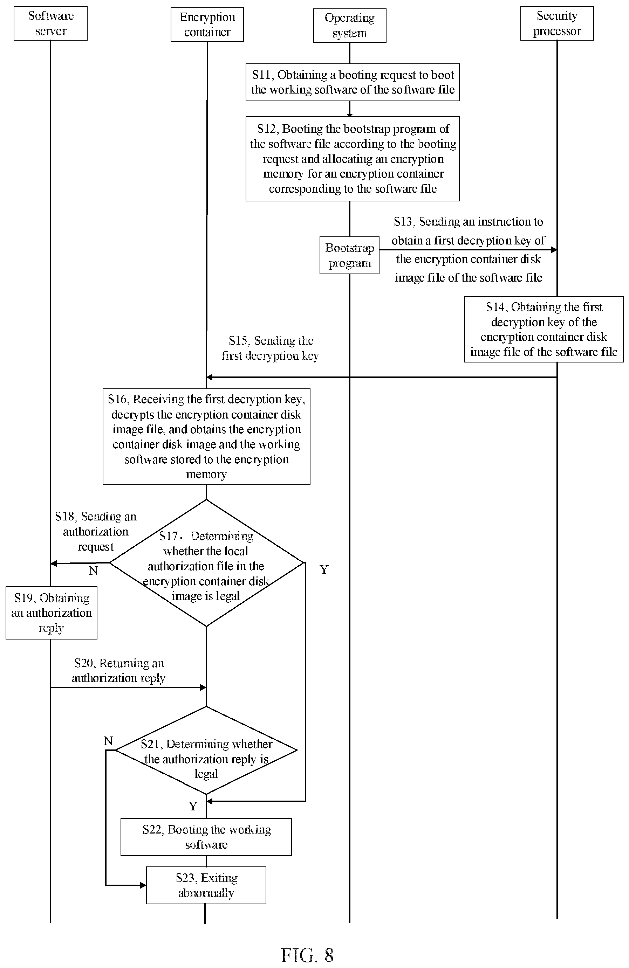

For the convenience of understanding, the software running method provided in the embodiments of the present disclosure is further described herein, with reference to FIG. 8, which is a schematic flowchart of a software running method provided in an embodiment of the present disclosure.

As illustrated in FIG.8, the software running method provided in an embodiment of the present disclosure includes:
Step S11: the operating system obtains a booting request for booting the working software of the software file.

When the user needs to run the software, the operating system can obtain a booting request to boot the working software described in any of the above embodiments through the booting input of the interactive interface.

In one specific embodiment, the specific booting request may be a request to boot a bootstrap program of a software file.

Step S12: the operating system boots the bootstrap program of the software file according to the booting request and allocates an encryption memory for an encryption container corresponding to the software file.

After obtaining the booting request, the operating system boots the bootstrap program and, at the same time, allocates the encryption memory for the encryption container corresponding to the encryption container disk image in the software file.

It is easy to understand that at this stage, the encryption container has not yet started, and the encryption memory is allocated for the encryption container in advance.

Step S13: the operating system sends an instruction to obtain a first decryption key of the encryption container disk image file of the software file to the security processor through the bootstrap program.

After the bootstrap program is booted and the allocation of the encryption memory is completed, the operating system sends an instruction to obtain the first decryption key to the security processor through the bootstrap program, so as to decrypt the encryption container disk image file, thereby performing subsequent operations.

Step S14: the security processor obtains the first decryption key of the encryption container disk image file of the software file.

In a specific implementation, when the encryption container disk image file is obtained by encrypting the encryption container disk image packaged with the working software through the first encryption key, and there is only one layer of encryption key, that is, the first encryption key is the first public key, the first decryption key obtained by the security processor is the first private key, and then the encryption container disk image file can be decrypted by using the corresponding first private key to obtain the encryption container disk image and the working software. In this way, the need for encryption and decryption can be simply achieved.

In another specific implementation, when the software file further includes a key ciphertext obtained by encrypting the first encryption key with a second encryption key, in order to obtain the first decryption key, it is necessary to first obtain a second decryption key corresponding to the second encryption key, then to decrypt the key ciphertext to obtain the first encryption key and the first decryption key (e.g., the same as the first encryption key) corresponding to the first encryption key; and then the encryption container disk image file is decrypted using the first decryption key to obtain the encryption container disk image and the working software. Therefore, the computing efficiency can be ensured and the user experience can be improved on the basis of achieving security.

It is easy to understand that in the scheme with only two layers of encryption-decryption keys (i.e., the scheme in which the key ciphertext is obtained by encrypting the first encryption key by the second encryption key, and the second encryption key is not further encrypted), in order to achieve the obtaining of the second decryption key, the second decryption key includes the second private key, and the corresponding second encryption key includes the second public key, so that when the second private key is used to decrypt the key ciphertext, the first encryption key, that is, the first decryption key, can be obtained, and the first decryption key can be further used to decrypt.

It should be noted that in one specific implementation, in order to further improve the security, the validity of the key ciphertext may also be determined before decrypting the key ciphertext.

Of course, if more layers of encryption-decryption keys are included, the second encryption key may not be a second public key, and the second decryption key may not be a second private key, but rather the outermost encryption key and the outermost decryption key may be a public key and a private key, respectively.

As mentioned above, the first encryption key and the first decryption key correspond to each other, which includes the case that the first encryption key and the first decryption key are a first public key and a first private key, respectively, and the case that the first encryption key and the first decryption key are equal. Similarly, the second encryption key and the second decryption key correspond to each other, which includes the case that the second encryption key and the second decryption key are a second public key and a second private key, respectively, and the case that the second encryption key and the second decryption key are equal.

Step S15: the security processor sends the first decryption key to the encryption container.

After obtaining the first decryption key, the security processor injects the first decryption key into the encryption container.

Step S16: the encryption container receives the first decryption key, decrypts the encryption container disk image file, and obtains the encryption container disk image and the working software stored to the encryption memory.

After the encryption container obtains the first decryption key, the encryption container decrypts the encryption container disk image file to obtain the encryption container disk image and the working software, and the encryption container disk image and the working software are saved in the encryption memory of the encryption container in order to ensure the security of the software.

It is easy to understand that in order to start the working software, to ensure the smooth operation of the working software, and to prevent the instruction from being stolen, it is necessary to make the working software run in a secure environment. For this purpose, the encryption container needs to be booted before the working software is booted, and therefore, the security processor also initializes the encryption container before decryption.

After completing the initialization of the encryption container, the operating system runs the encryption container disk image to boot the encryption container.

Of course, as long as the startup of the encryption container can be completed before decrypting the encryption container disk image file.

Step S17: the encryption container determines whether the local authorization file in the encryption container disk image is legal. If yes, step S22 is executed. If not, step S18 is executed.

As mentioned above, the running of genuine working software requires authorization.

To facilitate understanding, the present disclosure describes the software authorization function before the business function, so that the authorization situation is first confirmed.

In one specific implementation, the authorization situation can be confirmed by determining whether the local authorization file in the encryption container disk image is legal or not.

Specifically, whether the local authorization file is legal specifically includes: is the local authorization file within the validity period, and/or is it within the trial period?

If the local authorization file is legal, the working software is booted. If the local authorization file is illegal, further confirmation is required.

It can be seen that in the software running method provided in the embodiments of the present disclosure, the software is protected, before running, by encryption, which can prevent from skipping authorization to directly obtain the instruction of the working software; after the bootstrap program is booted and the decryption is performed, the encryption container disk image and the working software are stored in the encryption memory pre-allocated for the encryption container, and due to the access restriction of the encryption memory, it can still prevent from skipping the authorization to directly obtain the instruction of the working software; after the working software is booted, the working software runs in the secure environment of the encryption container, and the reading of the instruction and the reading of the data both require encryption and decryption with the key corresponding to the encryption container, which also prevents from skipping the authorization to directly obtain the instruction and data of the working software. Therefore, the software running method provided in the embodiments of the present disclosure can prevent the instruction from being obtained and thus from being reversed and cracked, whether before or during the running of the working software, and can improve the anti-piracy ability of the software.

In another specific implementation, when further obtaining an authorization reply is required, the software running method provided in the embodiments of the present disclosure may further include:
Step S18: the encryption container sends an authorization request to the software server.

When the local authorization file is illegal, it is not possible to boot the working software, then the encryption container obtains a new authorization file from the software server, so that the working software can be booted when the new authorization file is legal, thus avoiding the occurrence of the problem of not being able to boot the working software directly due to not having updated the local authorization file in time.

Specifically, in order to implement that the encryption container sends an authorization request to the software server, the following steps may be performed:
Firstly, the encryption container obtains the software authorization feature information of the working software, the software authorization feature information includes the mac (Media Access Control) number of the network card, the serial number of the disk, the version of the operating system, and the like, of the local computer environment where the working software is booted

After obtaining the software authorization feature information, the encryption container also needs to obtain a software authorization code

It is easy to understand that the software authorization code, for example, needs to be obtained by the user after completing the registration, payment, and other processes on the software vendor's webpage by using the software authorization feature information. That is, for the encryption container, the software authorization code input by the user can be received.

The encryption container then sends the software authorization feature information and the software authorization code to the software server of the working software, completes the sending of an authorization request, and requests the software server for authorization.

Through the above steps, the authorization request can be sent conveniently and timely, so that in the case where the local authorization file is illegal, it can also be achieved that the working software is booted to meet the needs of the user and at the same time protect the interests of the software service provider.

Step S19: the software server obtains an authorization reply.

After receiving the authorization request, the software server determines the payment status, validity period, and other information based on the information of the software authorization feature information and the software authorization code, and then determines the authorization reply.

Step S20: the software server returns an authorization reply to the encryption container.

After determining the authorization reply, the software server returns the authorization reply to the encryption container.

Step S21: determining whether the authorization reply is legal. If yes, executing step S22. If not, executing step S23.

If the authorization reply is legal, i.e., when an authorization legal reply is received, the working software is booted; when an authorization illegal reply is received, the encryption container abnormally exits, so that the working software is not booted.

Step S22: the encryption container boots the working software.

Step S23: the encryption container exits abnormally.

In this way, by obtaining the authorization reply from the software server, even if the local authorization file is illegal, the probability of using the working software can be improved by obtaining the latest authorization reply in a timely manner. At the same time, it can also guarantee the interests of the software service provider when receiving an authorization illegal reply.

In another specific implementation, in order to facilitate the subsequent startup of the working software, the newly obtained authorization legal reply can also be saved in the encryption container disk image, so that when the working software is booted next time, there is no need to obtain the authorization reply again.

However, when the encryption container is connected with the software server of the working software, there is also a situation in which the encryption container is unable to be connected to the software server, and in order to improve the user experience, in this case, it is also possible to start the working software in a trial state. Thereby, both the rights and interests of the software vendor can be guaranteed and the convenience of the user can be maximized.

In order to solve the above problem, the embodiments of the present disclosure also provide a software running apparatus. The software running apparatus described below may be considered as a functional module that is required to be set up by the operating system to implement the software running method provided in the embodiments of the present disclosure. The contents of the software running apparatus described below can be mutually and correspondingly referenced with the contents of the method described above.

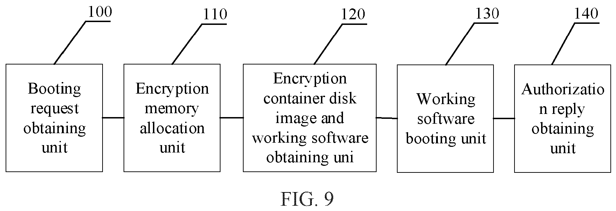

In an optional implementation, FIG. 9 illustrates a structural diagram of a software running apparatus provided in an embodiment of the present disclosure, the software running apparatus may be applied to an operating system, the software includes the software file as described in any of the above embodiments. As illustrated in FIG. 9, the software running apparatus may include:
a booting request obtaining unit 100, adapted to obtain a booting request to boot the working software of the software file;
an encryption memory allocation unit 110, adapted to boot the bootstrap program of the software file according to the booting request and allocate an encryption memory for an encryption container corresponding to the software file;
an encryption container disk image and working software obtaining unit 120, adapted to instruct the security processor through the bootstrap program to obtain the first decryption key of the encryption container disk image file of the software file and send the first decryption key to the encryption container, so that the encryption container decrypts the encryption container disk image file to obtain the encryption container disk image and the working software stored to the encryption memory, the first decryption key corresponding to the first encryption key and the encryption container disk image file being encrypted by the first encryption key; and
a working software booting unit 130, adapted to boot the working software when the encryption container is instructed to determine that a local authorization file in the encryption container disk image is legal.

In an optional example, the software running apparatus further includes: an authorization reply obtaining unit 140, adapted to instruct the encryption container, when the encryption container is instructed to determine that the local authorization file of the working software is illegal, to obtain an authorization reply from a software server corresponding to the working software, so as to boot the working software when the encryption container obtains an authorization legal reply.

In an optional example, the authorization reply obtaining unit 140 is further adapted to instruct the encryption container, when the encryption container is instructed to determine that the local authorization file of the working software is illegal, to obtain an authorization reply from a software server corresponding to the working software, so as to exit abnormally when the encryption container obtains an authorization illegal reply.

In an optional example, the authorization reply obtaining unit 140, adapted to instruct the encryption container to obtain an authorization reply from a software server corresponding to the working software, includes:
instructing the encryption container to obtain software authorization feature information of the working software and a software authorization code obtained according to the software authorization feature information; and
instructing the encryption container to send the software authorization feature information and the software authorization code to the software server of the working software to obtain the authorization reply.

In an optional example, the working software booting unit 130 is further adapted to boot the working software in a trial state when the encryption container is instructed to be connected to a software server of the working software and the encryption container cannot be connected to the software server.

In an optional example, the software file further comprises a key ciphertext obtained by encrypting the first encryption key with a second encryption key, and the encryption container disk image and working software obtaining unit 120, adapted to instruct the security processor through the bootstrap program to obtain the first decryption key of the encryption container disk image file of the software file and send the first decryption key to the encryption container, so that the encryption container decrypts the encryption container disk image file, further includes:
instructing the security processor through the bootstrap program to obtain a second decryption key for the key ciphertext, decrypting the key ciphertext to obtain the first encryption key and the first decryption key corresponding to the first encryption key, the second decryption key corresponding to the second encryption key; and
instructing the security processor to send the first decryption key to the encryption container, so that the encryption container decrypts the encryption container disk image file using the first decryption key.

In an optional example, the second encryption key comprises a second public key, and the second decryption key comprises a second private key, and the encryption container disk image and working software obtaining unit 120, adapted to instruct the security processor through the bootstrap program to obtain the first decryption key of the encryption container disk image file of the software file and send the first decryption key to the encryption container, so that the encryption container decrypts the encryption container disk image file, further includes:
instructing the security processor through the bootstrap program to obtain the second private key, decrypting the key ciphertext to obtain the first encryption key and the first decryption key corresponding to the first encryption key; and
instructing the security processor to send the first decryption key to the encryption container, so that the encryption container decrypts the encryption container disk image file using the first decryption key.

Embodiments of the present disclosure further provide an operating system, the operating system can execute a program which implements the software running method according to any one of the embodiments described above. For specific content, reference may be made to the description in the corresponding part above, and no further introduction will be made here.

Embodiments of the present disclosure further provide a computer system, which includes an operating system, the operating system can execute a program which implements the software running method according to any one of the embodiments described above. For specific content, reference may be made to the description in the corresponding part above, and no further introduction will be made here.

The scope of protection of the present disclosure is subject to the scope defined by the appended claims.

## Claims

1. A software running method, adapted to an operating system, wherein software comprises a software file,
the software file comprises:
an encryption container disk image file (1), encrypted by a first encryption key (3) and comprising an encryption container disk image (11) packaged with working software (12);
a bootstrap program (2), used to instruct a security processor to obtain a first decryption key corresponding to the first encryption key (3), so that an encryption container decrypts the encryption container disk image file (1) according to the first decryption key to obtain the encryption container disk image (11) and the working software (12) to be stored into an encryption memory of the encryption container, wherein the encryption container is a container corresponding to the encryption container disk image (11),
wherein the encryption container disk image (11) further comprises a local authorization file corresponding to the working software (12),
the method further comprises the operating system:
obtaining a booting request to boot the working software (12) of the software file;
booting the bootstrap program (2) of the software file according to the booting request and allocating an encryption memory for an encryption container corresponding to the software file;
wherein the method comprises instructing the security processor through the bootstrap program (2) to obtain the first decryption key of the encryption container disk image file (1) of the software file and sending the first decryption key to the encryption container, so that the encryption container decrypts the encryption container disk image file (1) to obtain the encryption container disk image (11) and the working software (12) to be stored into the encryption memory,
wherein the software method comprises the encryption container booting the working software (12) when the encryption container determines that the local authorization file in the encryption container disk image (11) is legal,
wherein the local authorization file is legal when the local authorization file is within a validity period, and/or is within a trial period.

2. The software running method according to claim 1, **characterized in that**: the software running method further comprises:
instructing the encryption container, when the encryption container determines that the local authorization file of the working software (12) is illegal, to obtain an authorization reply from a software server corresponding to the working software (12), so as to boot the working software (12) when the encryption container obtains an authorization legal reply.

3. The software running method according to claim 2, **characterized in that**: the software running method further comprises:
instructing the encryption container, when the encryption container determines that the local authorization file of the working software (12) is illegal, to obtain an authorization reply from a software server corresponding to the working software (12), so as to exit abnormally when the encryption container obtains an authorization illegal reply.

4. The software running method according to claim 2 or 3, **characterized in that**: the instructing the encryption container to obtain an authorization reply from a software server corresponding to the working software (12) comprises:
instructing the encryption container to obtain software authorization feature information of the working software (12) and a software authorization code obtained according to the software authorization feature information; and
instructing the encryption container to send the software authorization feature information and the software authorization code to the software server of the working software (12) to obtain the authorization reply.

5. The software running method according to any one of claims 1-4, **characterized in that**: the software running method further comprises:
booting the working software (12) in a trial state when the encryption container is instructed to be connected to a software server of the working software (12) and the encryption container is not capable of being connected to the software server.

6. The software running method according to any one of claims 1-5, **characterized in that**: the software file further comprises a key ciphertext (5) obtained by encrypting the first encryption key (3) with a second encryption key (4), the instructing the security processor through the bootstrap program (2) to obtain the first decryption key of the encryption container disk image file (1) of the software file and sending the first decryption key to the encryption container, so that the encryption container decrypts the encryption container disk image file (1), further comprises:
instructing the security processor through the bootstrap program (2) to obtain a second decryption key for the key ciphertext (5), decrypting the key ciphertext (5) to obtain the first encryption key (3) wherein the second decryption key corresponds to the second encryption key (4).

7. The software running method according to claim 6, **characterized in that**: the second encryption key (4) comprises a second public key, and the second decryption key comprises a second private key, the instructing the security processor through the bootstrap program (2) to obtain the first decryption key of the encryption container disk image file (1) of the software file and sending the first decryption key to the encryption container, so that the encryption container decrypts the encryption container disk image file (1), further comprises:
instructing the security processor through the bootstrap program (2) to obtain the second private key, decrypting the key ciphertext (5) to obtain the first encryption key (3) and the first decryption key corresponding to the first encryption key (3).

8. A software running apparatus, including an operating system and a software file,
the software file comprises:
an encryption container disk image file (1), encrypted by a first encryption key (3) and comprising an encryption container disk image (11) packaged with working software (12);
a bootstrap program (2), used to instruct a security processor to obtain a first decryption key corresponding to the first encryption key (3), so that an encryption container decrypts the encryption container disk image file (1) according to the first decryption key to obtain the encryption container disk image (11) and the working software (12) to be stored into an encryption memory of the encryption container, wherein the encryption container is a container corresponding to the encryption container disk image (11),
wherein the encryption container disk image (11) further comprises a local authorization file corresponding to the working software (12),
and the operating system comprises:
a booting request obtaining unit (100), adapted to obtain a booting request to boot the working software (12) of the software file;
an encryption memory allocation unit (110), adapted to boot the bootstrap program (2) of the software file according to the booting request and allocate an encryption memory for an encryption container corresponding to the software file;
wherein the bootstrap program comprises an encryption container disk image and working software obtaining unit (120), adapted to instruct the security processor to obtain the first decryption key of the encryption container disk image file (1) of the software file and send the first decryption key to the encryption container, so that the encryption container decrypts the encryption container disk image file (1) to obtain the encryption container disk image (11) and the working software (12) to be stored into the encryption memory,
wherein the encryption container comprises a working software booting unit (130), adapted to boot the working software (12) when the encryption container determines that the local authorization file in the encryption container disk image (11) is legal,
wherein the local authorization file is legal when the local authorization file is within a validity period, and/or is within a trial period.

9. The software running apparatus according to claim 8, **characterized in that**: the software running apparatus further comprises:
an authorization reply obtaining unit (140), adapted to instruct the encryption container, when the encryption container determines that the local authorization file of the working software (12) is illegal, to obtain an authorization reply from a software server corresponding to the working software (12), so as to boot the working software (12) when the encryption container obtains an authorization legal reply;
optionally, wherein the authorization reply obtaining unit (140) is further adapted to instruct the encryption container, when the encryption container determines that the local authorization file of the working software (12) is illegal, to obtain an authorization reply from a software server corresponding to the working software (12), so as to exit abnormally when the encryption container obtains an authorization illegal reply;
optionally, wherein the authorization reply obtaining unit (140), when adapted to instruct the encryption container to obtain an authorization reply from a software server corresponding to the working software (12), is adapted to:
instruct the encryption container to obtain software authorization feature information of the working software (12) and a software authorization code obtained according to the software authorization feature information; and
instruct the encryption container to send the software authorization feature information and the software authorization code to the software server of the working software (12) to obtain the authorization reply.

10. The software running apparatus according to claim 8 or 9, **characterized in that**: the working software booting unit (130) is further adapted to boot the working software (12) in a trial state when the encryption container is instructed to be connected to a software server of the working software (12) and the encryption container is not capable of being connected to the software server;
optionally, wherein the software file further comprises a key ciphertext (5) obtained by encrypting the first encryption key (3) with a second encryption key (4), and the encryption container disk image and working software obtaining unit (120), when adapted to instruct the security processor through the bootstrap program (2) to obtain the first decryption key of the encryption container disk image file (1) of the software file and send the first decryption key to the encryption container, so that the encryption container decrypts the encryption container disk image file (1), is further adapted to:
instruct the security processor through the bootstrap program (2) to obtain a second decryption key for the key ciphertext (5), decrypt the key ciphertext (5) to obtain the first encryption key (3) wherein the second decryption key corresponds to the second encryption key (4);
optionally, wherein the second encryption key (4) comprises a second public key, and the second decryption key comprises a second private key, and the encryption container disk image and working software obtaining unit (120), when adapted to instruct the security processor through the bootstrap program (2) to obtain the first decryption key of the encryption container disk image file (1) of the software file and send the first decryption key to the encryption container, so that the encryption container decrypts the encryption container disk image file (1), is further adapted to:
instruct the security processor through the bootstrap program (2) to obtain the second private key, decrypt the key ciphertext (5) to obtain the first encryption key (3) and the first decryption key corresponding to the first encryption key (3).

## Patentansprüche

1. Softwareausführungsverfahren, das an ein Betriebssystem angepasst ist, wobei die Software eine Softwaredatei umfasst,
die Softwaredatei umfasst Folgendes:
eine Verschlüsselungscontainerdatenträgerabbilddatei (1), die durch einen ersten Verschlüsselungsschlüssel (3) verschlüsselt ist und ein Verschlüsselungscontainerdatenträgerabbild (11) umfasst, das eine Arbeitssoftware (12) enthält;
ein Ladeprogramm (2), das verwendet wird, um einen Sicherheitsprozessor anzuweisen, einen ersten Entschlüsselungsschlüssel zu erhalten, der dem ersten Verschlüsselungsschlüssel (3) entspricht, derart, dass ein Verschlüsselungscontainer die Verschlüsselungscontainerdatenträgerabbilddatei (1) gemäß dem ersten Entschlüsselungsschlüssel entschlüsselt, um das Verschlüsselungscontainerdatenträgerabbild (11) und die Arbeitssoftware (12) zu erhalten, die in einem Verschlüsselungsspeicher des Verschlüsselungscontainers zu speichern sind, wobei der Verschlüsselungscontainer ein Container ist, der dem Verschlüsselungscontainerdatenträgerabbild (11) entspricht,
wobei das Verschlüsselungscontainerdatenträgerabbild (11) ferner eine lokale Autorisierungsdatei umfasst, die der Arbeitssoftware (12) entspricht,
das Verfahren umfasst ferner das Betriebssystem:
Erhalten einer Startanforderung, um die Arbeitssoftware (12) der Softwaredatei zu starten;
Starten des Ladeprogramms (2) der Softwaredatei gemäß der Startanforderung und Zuteilen eines Verschlüsselungsspeichers zu einem Verschlüsselungscontainer, der der Softwaredatei entspricht;
wobei das Verfahren Folgendes umfasst
Anweisen des Sicherheitsprozessors über das Ladeprogramm (2), den ersten Entschlüsselungsschlüssel des Verschlüsselungscontainerdatenträgerabbilds (1) der Softwaredatei zu erhalten und den ersten Entschlüsselungsschlüssel an den Verschlüsselungscontainer zu senden, derart, dass der Verschlüsselungscontainer die Verschlüsselungscontainerdatenträgerabbilddatei (1) entschlüsselt, um das Verschlüsselungscontainerdatenträgerabbild (11) und die Arbeitssoftware (12) zu erhalten, die im Verschlüsselungsspeicher zu speichern sind,
wobei das Softwareverfahren umfasst, dass der Verschlüsselungscontainer die Arbeitssoftware (12) startet, wenn der Verschlüsselungscontainer bestimmt, dass die lokale Autorisierungsdatei im Verschlüsselungscontainerdatenträgerabbild (11) legal ist,
wobei die lokale Autorisierungsdatei legal ist, wenn die lokale Autorisierungsdatei innerhalb einer Gültigkeitsperiode liegt und/oder innerhalb einer Versuchsperiode liegt.

2. Softwareausführungsverfahren nach Anspruch 1, **dadurch gekennzeichnet, dass**: das Softwareausführungsverfahren ferner Folgendes umfasst:
wenn der Verschlüsselungscontainer bestimmt, dass die lokale Autorisierungsdatei der Arbeitssoftware (12) nicht legal ist, Anweisen des Verschlüsselungscontainers, eine Autorisierungsantwort von einem Softwareserver zu erhalten, der der Arbeitssoftware (12) entspricht, um die Arbeitssoftware (12) zu starten, wenn der Verschlüsselungscontainer eine Antwort erhält, dass die Autorisierung legal ist.

3. Softwareausführungsverfahren nach Anspruch 2, **dadurch gekennzeichnet, dass** das Softwareausführungsverfahren ferner Folgendes umfasst:
wenn der Verschlüsselungscontainer bestimmt, dass die lokale Autorisierungsdatei der Arbeitssoftware (12) nicht legal ist, Anweisen des Verschlüsselungscontainers, eine Autorisierungsantwort von einem Softwareserver zu erhalten, der der Arbeitssoftware (12) entspricht, um unnormal zu beenden, wenn der Verschlüsselungscontainer eine Antwort erhält, dass die Autorisierung nicht legal ist.

4. Softwareausführungsverfahren nach Anspruch 2 oder 3, **dadurch gekennzeichnet, dass**: das Anweisen des Verschlüsselungscontainers, eine Autorisierungsantwort von einem Softwareserver zu erhalten, der der Arbeitssoftware (12) entspricht, Folgendes umfasst:
Anweisen des Verschlüsselungscontainers, Softwareautorisierungsmerkmalsinformationen der Arbeitssoftware (12) und einen Softwareautorisierungscode, der gemäß den Softwareautorisierungsmerkmalsinformationen erhalten wird, zu erhalten; und
Anweisen des Verschlüsselungscontainers, die Softwareautorisierungsmerkmalsinformationen und den Softwareautorisierungscode an den Softwareserver der Arbeitssoftware (12) zu senden, um die Autorisierungsantwort zu erhalten.

5. Softwareausführungsverfahren nach einem der Ansprüche 1 bis 4, **dadurch gekennzeichnet, dass**: das Softwareausführungsverfahren ferner Folgendes umfasst:
Starten der Arbeitssoftware (12) in einem Versuchszustand, wenn der Verschlüsselungscontainer angewiesen wird, mit einem Softwareserver der Arbeitssoftware (12) verbunden zu werden, und der Verschlüsselungscontainer nicht in der Lage ist, mit dem Softwareserver verbunden zu werden.

6. Softwareausführungsverfahren nach einem der Ansprüche 1 bis 5, **dadurch gekennzeichnet, dass**: die Softwaredatei ferner einen Schlüsselchiffretext (5) umfasst, der durch Verschlüsseln des ersten Verschlüsselungsschlüssels (3) mit einem zweiten Verschlüsselungsschlüssel (4) erhalten wird, das Anweisen des Sicherheitsprozessors über das Ladeprogramm (2), den ersten Entschlüsselungsschlüssel der Verschlüsselungscontainerdatenträgerabbilddatei (1) der Softwaredatei zu erhalten und das Senden des ersten Entschlüsselungsschlüssels an den Verschlüsselungscontainer, derart, dass der Verschlüsselungscontainer die Verschlüsselungscontainerdatenträgerabbilddatei (1) entschlüsselt, ferner Folgendes umfasst:
Anweisen des Sicherheitsprozessors über das Ladeprogramm (2), einen zweiten Entschlüsselungsschlüssel für den Schlüsselchiffretext (5) zu erhalten, Entschlüsseln des Schlüsselchiffretextes (5), um den ersten Verschlüsselungsschlüssel (3) zu erhalten, wobei der zweite Entschlüsselungsschlüssel dem zweiten Verschlüsselungsschlüssel (4) entspricht.

7. Softwareausführungsverfahren nach Anspruch 6, **dadurch gekennzeichnet, dass**: der zweite Verschlüsselungsschlüssel (4) einen zweiten öffentlichen Schlüssel umfasst und der zweite Entschlüsselungsschlüssel einen zweiten privaten Schlüssel umfasst, das Anweisen des Sicherheitsprozessors über das Ladeprogramm (2), den ersten Entschlüsselungsschlüssel der Verschlüsselungscontainerdatenträgerabbilddatei (1) der Softwaredatei zu erhalten und das Senden des Entschlüsselungsschlüssels an den Verschlüsselungscontainer, derart, dass der Verschlüsselungscontainer die Verschlüsselungscontainerdatenträgerabbilddatei (1) entschlüsselt, ferner Folgendes umfasst:
Anweisen des Sicherheitsprozessors über das Ladeprogramm (2), den zweiten privaten Schlüssel zu erhalten, Entschlüsseln des Schlüsselchiffretextes (5), um den Verschlüsselungsschlüssel (3) und den ersten Entschlüsselungsschlüssel, der dem ersten Verschlüsselungsschlüssel (3) entspricht, zu erhalten.

8. Softwareausführungseinrichtung, die ein Betriebssystem und eine Softwaredatei beinhaltet,
die Softwaredatei umfasst Folgendes:
eine Verschlüsselungscontainerdatenträgerabbilddatei (1), die durch einen ersten Verschlüsselungsschlüssel (3) verschlüsselt ist und ein Verschlüsselungscontainerdatenträgerabbild (11) umfasst, das eine Arbeitssoftware (12) enthält;
ein Ladeprogramm (2), das verwendet wird, um einen Sicherheitsprozessor anzuweisen, einen ersten Entschlüsselungsschlüssel zu erhalten, der dem ersten Verschlüsselungsschlüssel (3) entspricht, derart, dass ein Verschlüsselungscontainer die Verschlüsselungscontainerdatenträgerabbilddatei (1) gemäß dem ersten Entschlüsselungsschlüssel entschlüsselt, um das Verschlüsselungscontainerdatenträgerabbild (11) und die Arbeitssoftware (12) zu erhalten, die in einem Verschlüsselungsspeicher des Verschlüsselungscontainers zu speichern sind, wobei der Verschlüsselungscontainer ein Container ist, der dem Verschlüsselungscontainerdatenträgerabbild (11) entspricht,
wobei das Verschlüsselungscontainerdatenträgerabbild (11) ferner eine lokale Autorisierungsdatei umfasst, die der Arbeitssoftware (12) entspricht,
und das Betriebssystem umfasst Folgendes:
eine Startanforderungserhaltungseinheit (100), die angepasst ist, eine Startanforderung zu erhalten, um die Arbeitssoftware (12) der Softwaredatei zu starten;
eine Verschlüsselungsspeicherzuteilungseinheit (110), die angepasst ist, das Ladeprogramm (2) der Softwaredatei gemäß der Startanforderung zu starten, und einen Verschlüsselungsspeicher einem Verschlüsselungscontainer zuzuteilen, der der Softwaredatei entspricht;
wobei das Ladeprogramm eine Verschlüsselungscontainerdatenträgerabbild- und Arbeitssoftwareerhaltungseinheit (120) umfasst, die angepasst ist, den Sicherheitsprozessor anzuweisen, den ersten Entschlüsselungsschlüssel der Verschlüsselungscontainerdatenträgerabbilddatei (1) der Softwaredatei zu erhalten und den ersten Entschlüsselungsschlüssel an den Verschlüsselungscontainer zu senden, derart, dass der Verschlüsselungscontainer die Verschlüsselungscontainerdatenträgerabbilddatei (1) entschlüsselt, um das Verschlüsselungscontainerdatenträgerabbild (11) und die Arbeitssoftware (12) zu erhalten, die im Verschlüsselungsspeicher zu speichern sind,
wobei der Verschlüsselungscontainer eine Arbeitssoftwarestarteinheit (130) umfasst, die angepasst ist, die Arbeitssoftware (12) zu starten, wenn der Verschlüsselungscontainer bestimmt, dass die lokale Autorisierungsdatei im Verschlüsselungscontainerdatenträgerabbild (11) legal ist,
wobei die lokale Autorisierungsdatei legal ist, wenn die lokale Autorisierungsdatei innerhalb einer Gültigkeitsperiode liegt und/oder innerhalb einer Versuchsperiode liegt.

9. Softwareausführungseinrichtung nach Anspruch 8, **dadurch gekennzeichnet, dass**: die Softwareausführungseinrichtung ferner Folgendes umfasst:
eine Autorisierungsantworterhaltungseinheit (140), die, wenn der Verschlüsselungscontainer bestimmt, dass die lokale Autorisierungsdatei der Arbeitssoftware (12) nicht legal ist, angepasst ist, den Verschlüsselungscontainer anzuweisen, eine Autorisierungsantwort von einem Softwareserver zu erhalten, der der Arbeitssoftware (12) entspricht, um die Arbeitssoftware (12) zu starten, wenn der Verschlüsselungscontainer eine Antwort erhält, dass die Autorisierung legal ist;
wahlweise wobei die Autorisierungsantworterhaltungseinheit (140), wenn der Verschlüsselungscontainer bestimmt, dass die lokale Autorisierungsdatei der Arbeitssoftware (12) nicht legal ist, ferner angepasst ist, den Verschlüsselungscontainer anzuweisen, eine Autorisierungsantwort von einem Softwareserver zu erhalten, der der Arbeitssoftware (12) entspricht, um unnormal zu beenden, wenn der Verschlüsselungscontainer eine Antwort erhält, dass die Autorisierung nicht legal ist;
wahlweise wobei die Autorisierungsantworterhaltungseinheit (140), wenn sie angepasst ist, den Verschlüsselungscontainer anzuweisen, eine Autorisierungsantwort von einem Softwareserver zu erhalten, der der Arbeitssoftware (12) entspricht, zu Folgendem angepasst ist:
Anweisen des Verschlüsselungscontainers, Softwareautorisierungsmerkmalsinformationen der Arbeitssoftware (12) und einen Softwareautorisierungscode, der gemäß den Softwareautorisierungsmerkmalsinformationen erhalten wird, zu erhalten; und
Anweisen des Verschlüsselungscontainers, die Softwareautorisierungsmerkmalsinformationen und den Softwareautorisierungscode an den Softwareserver der Arbeitssoftware (12) zu senden, um die Autorisierungsantwort zu erhalten.

10. Softwareausführungseinrichtung nach Anspruch 8 oder 9, **dadurch gekennzeichnet, dass**: die Arbeitssoftwarestarteinheit (130) ferner angepasst ist, die Arbeitssoftware (12) in einem Versuchszustand zu starten, wenn der Verschlüsselungscontainer angewiesen wird, mit einem Softwareserver der Arbeitssoftware (12) verbunden zu werden, und der Verschlüsselungscontainer nicht in der Lage ist, mit dem Softwareserver verbunden zu werden;
wahlweise wobei die Softwaredatei ferner einen Schlüsselchiffretext (5) umfasst, der durch Verschlüsseln des ersten Verschlüsselungsschlüssels (3) mit einem zweiten Verschlüsselungsschlüssel (4) erhalten wird, und die Verschlüsselungscontainerdatenträgerabbild- und Arbeitssoftwareerhaltungseinheit (120), wenn sie angepasst ist, den Sicherheitsprozessor über das Ladeprogramm (2) anzuweisen, den ersten Entschlüsselungsschlüssel der Verschlüsselungscontainerdatenträgerabbilddatei (1) der Softwaredatei zu erhalten und den ersten Entschlüsselungsschlüssel an den Verschlüsselungscontainer zu senden, derart, dass der Verschlüsselungscontainer die Verschlüsselungscontainerdatenträgerabbilddatei (1) entschlüsselt, ferner zu Folgendem angepasst ist:
Anweisen des Sicherheitsprozessors über das Ladeprogramm (2), einen zweiten Entschlüsselungsschlüssel für den Schlüsselchiffretext (5) zu erhalten, Entschlüsseln des Schlüsselchiffretextes (5), um den ersten Verschlüsselungsschlüssel (3) zu erhalten, wobei der zweite Entschlüsselungsschlüssel dem zweiten Verschlüsselungsschlüssel (4) entspricht;
wahlweise wobei der zweite Verschlüsselungsschlüssel (4) einen zweiten öffentlichen Schlüssel umfasst und der zweite Entschlüsselungsschlüssel einen zweiten privaten Schlüssel umfasst und die Verschlüsselungscontainerdatenträgerabbild- und Arbeitssoftwareerhaltungseinheit (120), wenn sie angepasst ist, den Sicherheitsprozessor über das Ladeprogramm (2) anzuweisen, den ersten Entschlüsselungsschlüssel der Verschlüsselungscontainerdatenträgerabbilddatei (1) der Softwaredatei zu erhalten und den ersten Entschlüsselungsschlüssel an den Verschlüsselungscontainer zu senden, derart, dass der Verschlüsselungscontainer die Verschlüsselungscontainerdatenträgerabbilddatei (1) entschlüsselt, ferner zu Folgendem angepasst ist:
Anweisen des Sicherheitsprozessors über das Ladeprogramm (2), den zweiten privaten Schlüssel zu erhalten, Entschlüsseln des Schlüsselchiffretextes (5), um den Verschlüsselungsschlüssel (3) und den ersten Entschlüsselungsschlüssel, der dem ersten Verschlüsselungsschlüssel (3) entspricht, zu erhalten.

## Revendications

1. Procédé d'exécution d'un logiciel, adapté à un système d'exploitation, dans lequel le logiciel comprend un fichier logiciel,
le fichier logiciel comprend :
un fichier image disque de conteneur de chiffrement (1), chiffré par une première clé de chiffrement (3) et comprenant une image disque de conteneur de chiffrement (11) contenant un logiciel de travail (12) ;
un programme d'amorçage (2), utilisé pour ordonner à un processeur de sécurité d'obtenir une première clé de déchiffrement correspondant à la première clé de chiffrement (3), de sorte qu'un conteneur de chiffrement déchiffre le fichier d'image disque de conteneur de chiffrement (1) selon la première clé de déchiffrement pour obtenir l'image disque de conteneur de chiffrement (11) et le logiciel de travail (12) à stocker dans une mémoire de chiffrement du conteneur de chiffrement, dans lequel le conteneur de chiffrement est un conteneur correspondant à l'image disque de conteneur de chiffrement (11),
dans lequel l'image disque de conteneur de chiffrement (11) comprend en outre un fichier d'autorisation local correspondant au logiciel de travail (12),
le procédé comprend en outre le système d'exploitation :
obtenant une demande de démarrage pour démarrer le logiciel de travail (12) du fichier logiciel ;
démarrant le programme d'amorçage (2) du fichier logiciel conformément à la demande de démarrage et allouant une mémoire de chiffrement pour un conteneur de chiffrement correspondant au fichier logiciel ;
dans lequel le procédé comprend le fait de donner instruction au processeur de sécurité, par l'intermédiaire du programme d'amorçage (2), d'obtenir la première clé de déchiffrement du fichier d'image disque du conteneur de chiffrement (1) du fichier logiciel et d'envoyer la première clé de déchiffrement au conteneur de chiffrement, de sorte que le conteneur de chiffrement déchiffre le fichier image disque du conteneur de chiffrement (1) pour obtenir l'image disque du conteneur de chiffrement (11) et le logiciel de travail (12) à stocker dans la mémoire de chiffrement,
dans lequel le procédé logiciel comprend le démarrage par le conteneur de chiffrement du logiciel de travail (12) lorsque le conteneur de chiffrement détermine que le fichier d'autorisation local dans l'image disque du conteneur de chiffrement (11) est valide,
dans lequel le fichier d'autorisation local est valide lorsque le fichier d'autorisation local se trouve dans une période de validité, et/ou se trouve dans une période d'essai .

2. Procédé d'exécution de logiciel selon la revendication 1, **caractérisé en ce que** : le procédé d'exécution de logiciel comprend en outre :
donner pour instruction au conteneur de chiffrement, lorsque celui-ci détermine que le fichier d'autorisation local du logiciel de travail (12) n'est pas valide, d'obtenir une réponse d'autorisation d'un serveur logiciel correspondant au logiciel de travail (12), de manière à démarrer le logiciel de travail (12) lorsque le conteneur de chiffrement obtient une réponse d'autorisation valide.

3. Procédé d'exécution de logiciel selon la revendication 2, **caractérisé en ce que** : le procédé d'exécution de logiciel comprend en outre :
donner instruction au conteneur de chiffrement, lorsque celui-ci détermine que le fichier d'autorisation local du logiciel de travail (12) n'est pas valide, d'obtenir une réponse d'autorisation d'un serveur logiciel correspondant au logiciel de travail (12), de manière à se fermer de manière anormale lorsque le conteneur de chiffrement obtient une réponse d'autorisation non valide.

4. Procédé d'exécution de logiciel selon la revendication 2 ou 3, **caractérisé en ce que** : le fait de demander au conteneur de chiffrement d'obtenir une réponse d'autorisation d'un serveur logiciel correspondant au logiciel de travail (12) comprend :
l'instruction donnée au conteneur de chiffrement d'obtenir des informations de caractéristiques d'autorisation de logiciel du logiciel de travail (12) et un code d'autorisation de logiciel obtenu en fonction des informations de caractéristiques d'autorisation de logiciel ; et
ordonner au conteneur de chiffrement d'envoyer les informations de caractéristiques d'autorisation du logiciel et le code d'autorisation du logiciel au serveur logiciel du logiciel de travail (12) afin d'obtenir la réponse d'autorisation.

5. Procédé d'exécution de logiciel selon l'une quelconque des revendications 1 à 4, **caractérisé en ce que** : le procédé d'exécution de logiciel comprend en outre :
le démarrage du logiciel de travail (12) dans un mode d'essai lorsque le conteneur de chiffrement reçoit l'instruction de se connecter à un serveur logiciel du logiciel de travail (12) et que le conteneur de chiffrement n'est pas en mesure de se connecter au serveur logiciel.

6. Procédé d'exécution de logiciel selon l'une quelconque des revendications 1 à 5, **caractérisé en ce que** : le fichier logiciel comprend en outre un texte chiffré de clé (5) obtenu en chiffrant la première clé de chiffrement (3) avec une deuxième clé de chiffrement (4), l'instruction donnée au processeur de sécurité par l'intermédiaire du programme d'amorçage (2) d'obtenir la première clé de déchiffrement du fichier image disque du conteneur de chiffrement (1) du fichier logiciel et l'envoi de la première clé de déchiffrement au conteneur de chiffrement, de sorte que le conteneur de chiffrement déchiffre le fichier image disque du conteneur de chiffrement (1), comprend en outre :
l'instruction donnée au processeur de sécurité par l'intermédiaire du programme d'amorçage (2) d'obtenir une deuxième clé de déchiffrement pour le texte chiffré de clé (5), le déchiffrement du texte chiffré de clé (5) pour obtenir la première clé de chiffrement (3),
dans lequel la deuxième clé de déchiffrement correspond à la deuxième clé de chiffrement (4).

7. Procédé d'exécution de logiciel selon la revendication 6, **caractérisé en ce que** : la deuxième clé de chiffrement (4) comprend une deuxième clé publique, et la deuxième clé de déchiffrement comprend une deuxième clé privée, l'étape consistant à ordonner au processeur de sécurité, par l'intermédiaire du programme d'amorçage (2), d'obtenir la première clé de déchiffrement du fichier image disque du conteneur de chiffrement (1) du fichier logiciel et à envoyer la première clé de déchiffrement au conteneur de chiffrement, de sorte que le conteneur de chiffrement déchiffre le fichier image disque du conteneur de chiffrement (1), comprend en outre :
l'instruction donnée au processeur de sécurité par l'intermédiaire du programme d'amorçage (2) d'obtenir la deuxième clé privée, le déchiffrement du texte chiffré de la clé (5) pour obtenir la première clé de chiffrement (3) et la première clé de déchiffrement correspondant à la première clé de chiffrement (3).

8. Appareil d'exécution de logiciel comprenant un système d'exploitation et un fichier logiciel,
le fichier logiciel comprend :
un fichier image disque de conteneur de chiffrement (1), chiffré par une première clé de chiffrement (3) et comprenant une image disque de conteneur de chiffrement (11) contenant un logiciel de travail (12) ;
un programme d'amorçage (2), utilisé pour ordonner à un processeur de sécurité d'obtenir une première clé de déchiffrement correspondant à la première clé de chiffrement (3), de sorte qu'un conteneur de chiffrement déchiffre le fichier d'image disque de conteneur de chiffrement (1) selon la première clé de déchiffrement pour obtenir l'image disque de conteneur de chiffrement (11) et le logiciel de travail (12) à stocker dans une mémoire de chiffrement du conteneur de chiffrement, dans lequel le conteneur de chiffrement est un conteneur correspondant à l'image disque de conteneur de chiffrement (11),
dans lequel l'image disque du conteneur de chiffrement (11) comprend en outre un fichier d'autorisation local correspondant au logiciel de travail (12),
et le système d'exploitation comprend :
une unité d'obtention de demande de démarrage (100), adaptée pour obtenir une demande de démarrage afin de démarrer le logiciel de travail (12) du fichier logiciel ;
une unité d'allocation de mémoire de chiffrement (110), adaptée pour démarrer le programme d'amorçage (2) du fichier logiciel conformément à la demande de démarrage et allouer une mémoire de chiffrement pour un conteneur de chiffrement correspondant au fichier logiciel ;
dans lequel le programme d'amorçage comprend une unité d'obtention d'image disque de conteneur de chiffrement et de logiciel de travail (120), adaptée pour ordonner au processeur de sécurité d'obtenir la première clé de déchiffrement du fichier d'image disque du conteneur de chiffrement (1) du fichier logiciel et d'envoyer la première clé de déchiffrement au conteneur de chiffrement, de sorte que le conteneur de chiffrement déchiffre le fichier d'image disque du conteneur de chiffrement (1) pour obtenir l'image disque du conteneur de chiffrement (11) et le logiciel de travail (12) à stocker dans la mémoire de chiffrement ;
dans lequel le conteneur de chiffrement comprend une unité de démarrage du logiciel d'exploitation (130), conçue pour démarrer le logiciel d'exploitation (12) lorsque le conteneur de chiffrement détermine que le fichier d'autorisation local contenu dans l'image disque du conteneur de chiffrement (11) est valide,
dans lequel le fichier d'autorisation local est valide lorsque ce fichier se trouve dans une période de validité et/ou dans une période d'essai.

9. Appareil d'exécution de logiciel selon la revendication 8, **caractérisé en ce que** : l'appareil d'exécution de logiciel comprend en outre :
une unité d'obtention de réponse d'autorisation (140), adaptée pour ordonner au conteneur de chiffrement, lorsque celui-ci détermine que le fichier d'autorisation local du logiciel de travail (12) n'est pas valide, d'obtenir une réponse d'autorisation auprès d'un serveur logiciel correspondant au logiciel de travail (12), de manière à démarrer le logiciel d'exploitation (12) lorsque le conteneur de chiffrement obtient une réponse d'autorisation valide ;
optionnellement, dans lequel l'unité d'obtention de réponse d'autorisation (140) est en outre adaptée pour ordonner au conteneur de chiffrement, lorsque celui-ci détermine que le fichier d'autorisation local du logiciel de travail (12) n'est pas illégal, d'obtenir une réponse d'autorisation auprès d'un serveur logiciel correspondant au logiciel de travail (12), de manière à se fermer de manière anormale lorsque le conteneur de chiffrement obtient une réponse d'autorisation non valide ;
optionnellement, dans lequel l'unité d'obtention de réponse d'autorisation (140), lorsqu'elle est adaptée pour ordonner au conteneur de chiffrement d'obtenir une réponse d'autorisation auprès d'un serveur logiciel correspondant au logiciel optionnellement (12), est adaptée pour :
ordonner au conteneur de chiffrement d'obtenir des informations de caractéristiques d'autorisation du logiciel de travail (12) et un code d'autorisation de logiciel obtenu en fonction des informations de caractéristiques d'autorisation de logiciel ; et
ordonner au conteneur de chiffrement d'envoyer les informations de caractéristiques d'autorisation de logiciel et le code d'autorisation de logiciel au serveur logiciel du logiciel de travail (12) afin d'obtenir la réponse d'autorisation.

10. Appareil d'exécution de logiciel selon la revendication 8 ou 9, **caractérisé en ce que** :
l'unité de démarrage du logiciel de travail (130) est en outre adaptée pour démarrer le logiciel de travail (12) dans un état d'essai lorsque le conteneur de chiffrement reçoit l'instruction de se connecter à un serveur logiciel du logiciel de travail (12) et que le conteneur de chiffrement n'est pas en mesure de se connecter au serveur logiciel ;
optionnellement, dans lequel le fichier logiciel comprend en outre un texte chiffré de clé (5) obtenu en chiffrant la première clé de chiffrement (3) avec une deuxième clé de chiffrement (4), et l'unité d'obtention de l'image disque du conteneur de chiffrement et du logiciel de travail (120), lorsqu'elle est adaptée pour ordonner au processeur de sécurité, par l'intermédiaire du programme d'amorçage (2), d'obtenir la première clé de déchiffrement du fichier d'image disque du conteneur de chiffrement (1) du fichier logiciel et d'envoyer la première clé de déchiffrement au conteneur de chiffrement, de sorte que le conteneur de chiffrement déchiffre le fichier d'image disque du conteneur de chiffrement (1), est en outre adaptée pour :
donner instruction au processeur de sécurité, par l'intermédiaire du programme d'amorçage (2), d'obtenir une deuxième clé de déchiffrement pour le texte chiffré de la clé (5), déchiffrer le texte chiffré de la clé (5) afin d'obtenir la première clé de chiffrement (3), la deuxième clé de déchiffrement correspondant à la deuxième clé de chiffrement (4) ; et
optionnellement, la deuxième clé de chiffrement (4) comprenant une deuxième clé publique, et la deuxième clé de déchiffrement comprenant une deuxième clé privée, et l'unité d'obtention de l'image disque du conteneur de chiffrement et du logiciel de travail (120), lorsqu'elle est adaptée pour ordonner au processeur de sécurité, par l'intermédiaire du programme d'amorçage (2), d'obtenir la première clé de déchiffrement du fichier d'image disque du conteneur de chiffrement (1) du fichier logiciel et d'envoyer la première clé de déchiffrement au conteneur de chiffrement, de sorte que le conteneur de chiffrement déchiffre le fichier d'image disque du conteneur de chiffrement (1), est en outre adaptée pour :
ordonner au processeur de sécurité, par l'intermédiaire du programme d'amorçage (2), d'obtenir la deuxième clé privée, de déchiffrer le texte chiffré de la clé (5) pour obtenir la première clé de chiffrement (3) et la première clé de déchiffrement correspondant à la première clé de chiffrement (3).
